# EUROPEAN PATENT SPECIFICATION

(11) **EP 4 028 445 B1**
(45) Date of publication and mention of the grant of the patent: **16.08.2023**
(21) Application number: 20771296.9
(22) Date of filing: 11.09.2020
(51) Int. Cl.: C08G 18/75, C08G 18/48, C08G 18/62, C08G 18/42, C08G 18/67, D01D 5/00, D01F 6/70, B01D 67/00, B01D 71/54, C08F 290/06

(54) **FIBROUS MATERIALS**
FASERMATERIALIEN
MATÉRIAUX FIBREUX

(30) Priority: 11.09.2019 EP 19196664
(43) Date of publication of application: 20.07.2022
(73) Proprietor: Universiteit Gent, 9000 Gent (BE)
(72) Inventor: MIGNON, Arn, 9500 Geraardsbergen (BE); GHEYSENS, Tom, 9000 Gent (BE); VAN VLIERBERGHE, Sandra, 9100 Sint-Niklaas (BE); DUBRUEL, Peter, 9000 Gent (BE)
(74) Representative: Arnold & Siedsma
(86) International application number: PCT/EP2020/075476
(87) International publication number: WO 2021/048358

(56) References cited:
- US-A1- 2018 194 890

## Description

### FIELD OF THE INVENTION

The present invention relates to the field of fibrous materials, more in particular comprising a cross-linkable urethane-based polymer (CUP) and an oligomeric or macromonomeric urethane-based cross-linker. The present invention also provides uses of such fibrous materials, such as for example as a hydrogel, in filtration devices, in affinity membranes, in (protective) clothing, in drug delivery systems, in tissue scaffolds, etc. It further provides the fibrous materials as defined herein for use in human and/or veterinary medicine, such as for use in skin and/or wound care.

### BACKGROUND TO THE INVENTION

In recent years, micro/nanomaterials have emerged as useful components in various applications, ranging from medical applications over environmental applications (e.g. filtration) even up to the use in safety devices, such as in (protective) clothing. The reason for this, is that micro/nanomaterials have unusual properties compared to macro-sized materials, due to their micro/nanoscale dimensions. In particular, they have extraordinary high surface area-to-volume ratios, and they can be tunable.

Micro/nanomaterials are often composed of fibers having micro/nanoscale diameters, in the form of micro/nanofibers. Such micro/nanofibers can be produced using a variety of techniques, including template synthesis, phase separation, self-assembly, electrospinning, etc.

Electrospinning is a particularly suitable fiber production method that uses electric forces to draw charged threads of polymer solutions or polymer melts up to fiber diameters in the order of some hundred micro/nanometers. The process does not require the use of coagulation chemistry or high temperatures to produce solid threads from solution. This makes the process particularly suited to the production of (micro/nano) fibers using large and complex molecules.

Micro/nanofiber matrices can have numerous applications particularly in the biomedical field such as for wound dressings or tissue scaffolds. Such electrospun dressings and scaffolds have exceptionally high surface areas and porosities because they are comprised of fibers with micro/nanoscale diameters, thereby enabling them to encourage superior cell infiltration, adhesion and efflux of liquids.

Electrospinning has the disadvantage however, that often toxic solvents are needed and that it is highly dependent on the starting materials to obtain the desired results. Starting materials that are particularly preferable for use in electrospinning (or other fiber production methods) should be processable, spinnable, non-shrinkable and stable. It is in particular difficult to select components having hydrogel properties, while still being easily processable and/or stabilized into fibers.

It was thus an object of the present invention to provide a solution to the above-stated problems. Now, the inventors have surprisingly found that a cross-linkable urethane-based polymer (CUP) as defined herein in combination with an oligomeric or macromonomeric urethane-based cross-linker is particularly suitable in the preparation of fibrous materials via electrospinning, or other methods for preparing micro/nanofibers. It was specifically found that a combination of high molecular weight and low molecular weight CUPs is particularly suitable for said purpose.

### SUMMARY OF THE INVENTION

In a first aspect, the present invention provides a fibrous material comprising:
- an oligomeric or macromonomeric urethane-based cross-linker; and
- a cross-linkable urethane-based polymer (CUP) represented by formula (I) 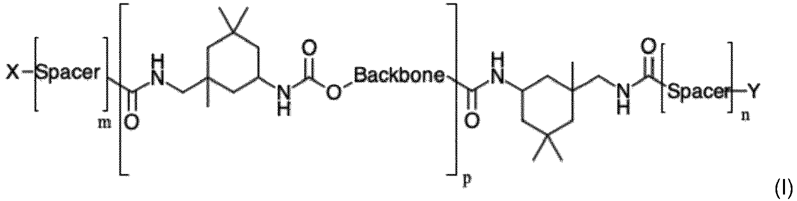
wherein
each occurrence of X and Y is independently a moiety comprising one or more of the following: acrylate groups, (multi)methacrylate groups, (multi)acrylate group, thiolactones and thiol-ene crosslinkable groups;
each occurrence of Spacer is independently selected from the list comprising: oligo(ethylene oxide), oligo(propylene oxide), oligo(caprolactone), oligo(lactide) and oligo(glycolide);
m and n are each independently from 1-6;
p is from 1-10; and
each occurrence of Backbone is independently selected from the list comprising poly(ethylene glycol) (PEG), poly(vinyl pyrrolidone) (PVP), poly(N-vinyl caprolactam) (PNVCL), poly(caprolactone) (PCL), poly(lactic acid) (PLA) or a combination thereof.

In a specific embodiment, the present invention provides a fibrous material comprising:
- an oligomeric or macromonomeric urethane-based cross-linker having a backbone molecular weight of less than or equal to 2000 g/mol; and
- a cross-linkable urethane-based polymer (CUP) represented by formula (I) and having a backbone molecular weight of above 2000 g/mol; 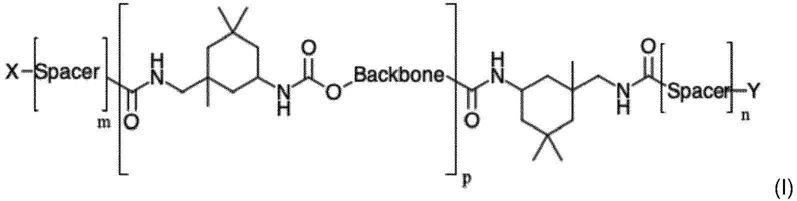
wherein
each occurrence of X and Y is independently a moiety comprising one or more of the following: acrylate groups, (multi)methacrylate groups, (multi)acrylate group, thiolactones and thiol-ene crosslinkable groups;
each occurrence of Spacer is independently selected from the list comprising: oligo(ethylene oxide), oligo(propylene oxide), oligo(caprolactone), oligo(lactide) and oligo(glycolide);
m and n are each independent from 1-6;
p is from 1-10; and
each occurrence of Backbone is independently selected from the list comprising poly(ethylene glycol) (PEG), poly(vinyl pyrrolidone) (PVP), poly(N-vinyl caprolactam) (PNVCL), poly(caprolactone) (PCL), poly(lactic acid) (PLA) or a combination thereof.

In a particular embodiment of the present invention, at least one occurrence of said Backbone is PEG; in particular PEG having a molecular weight of above 10000 g/mol (PEG10k); more in particular PEG 12k, PEG20k, PEG35k or PEG40k; preferably PEG20k.

In another particular embodiment, said urethane-based crosslinker has a backbone selected from the list comprising PEG, multi-(meth)acrylate or multi-(meth)acrylamide or a thiol-ene crosslinkable group; in particular said crosslinker is a cross-linkable urethane-based polymer (CUP) represented by formula (I), wherein PEG has a molecular weight of about 400 g/mol (CUP-PEG400) to about 2000 g/mol (CUP-PEG2k).

In a further particular embodiment, the weight ratio of said CUP to crosslinker is between 90:10 and 60:40; preferably 90:10.

In a specific embodiment, the present invention provides a fibrous material comprising:
- a cross-linkable urethane-based polymer (CUP) represented by formula (I), wherein PEG has a molecular weight of above 10000 g/mol;
- as crosslinker, a cross-linkable urethane-based polymer (CUP) represented by formula (I), wherein PEG has a molecular weight of about 400 g/mol (CUP-PEG400) to about 2000 g/mol (CUP-PEG2k).

In a very specific embodiment, the present invention provides a fibrous material comprising:
- a cross-linkable urethane-based polymer (CUP) represented by formula (I), wherein PEG has a molecular weight of about 20000 g/mol (CUP-PEG20k);
- as crosslinker, a cross-linkable urethane-based polymer (CUP) represented by formula (I), wherein PEG has a molecular weight of about 2000 g/mol (CUP-PEG2k).

In a further embodiment of the present invention, the weight ratio of said CUP-PEG20k to CUP-PEG2k is 90:10.

In another embodiment, the fibrous material of the present invention may further comprise an active agent.

In another embodiment, the fibrous material may be chemically crosslinked.

The present invention also provides the use of the fibrous material as defined herein; as a hydrogel, in filtration devices, in affinity membranes, in (protective) clothing, in drug delivery systems, in tissue scaffolds.

The present invention further provides the fibrous material as defined herein for use in human and/or veterinary medicine; in particular for use in skin care and/or wound care.

The present invention also provides a fibrous material as defined herein for use in human and/or veterinary medicine; more in particular for use in skin care and/or wound care.

### DETAILED DESCRIPTION OF THE INVENTION

As already detailed herein above, the present invention provides a fibrous material comprising:
- an oligomeric or macromonomeric urethane-based cross-linker; and
- a cross-linkable urethane-based polymer (CUP) represented by formula (I) 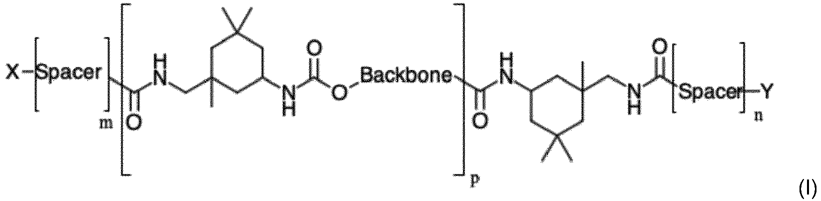
wherein
each occurrence of X and Y is independently a moiety comprising one or more of the following: acrylate groups, (multi)methacrylate groups, (multi)acrylate group, thiolactones and thiol-ene crosslinkable groups;
each occurrence of Spacer is independently selected from the list comprising: oligo(ethylene oxide), oligo(propylene oxide), oligo(caprolactone), oligo(lactide) and oligo(glycolide);
m and n are each independently from 1-6;
p is from 1-10; and
each occurrence of Backbone is independently selected from the list comprising poly(ethylene glycol) (PEG), poly(vinyl pyrrolidone) (PVP), poly(N-vinyl caprolactam) (PNVCL), poly(caprolactone) (PCL), poly(lactic acid) (PLA) or a combination thereof.

In a specific embodiment, the present invention provides a fibrous material comprising:
- an oligomeric or macromonomeric urethane-based cross-linker having a backbone molecular weight of less than or equal to 2000 g/mol; and
- a cross-linkable urethane-based polymer (CUP) represented by formula (I) and having a backbone molecular weight of above 2000 g/mol 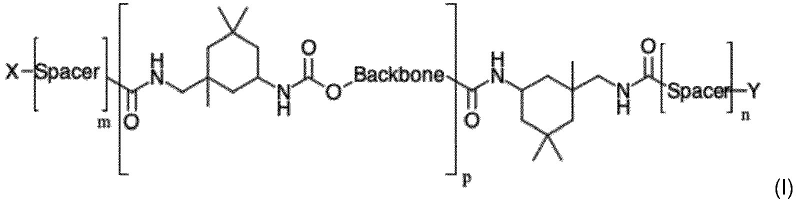
wherein
each occurrence of X and Y is independently a moiety comprising one or more of the following: acrylate groups, (multi)methacrylate groups, (multi)acrylate group, thiolactones and thiol-ene crosslinkable groups;
each occurrence of Spacer is independently selected from the list comprising: oligo(ethylene oxide), oligo(propylene oxide), oligo(caprolactone), oligo(lactide) and oligo(glycolide);
m and n are each independent from 1-6;
p is from 1-10; and
each occurrence of Backbone is independently selected from the list comprising poly(ethylene glycol) (PEG), poly(vinyl pyrrolidone) (PVP), poly(N-vinyl caprolactam) (PNVCL), poly(caprolactone) (PCL), poly(lactic acid) (PLA) or a combination thereof.

In the context of the present invention, the term "urethane-based polymer" is meant to be a polymeric agent containing one or more carbamate or urethane links. A carbamate is an organic compound derived from carbamic acid (NH₂COOH), and as such a carbamate link may be generally represented as follows: 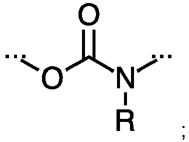 wherein each of said "..." represents an attachment point to the remainder of the polymer molecule. In the context of the present invention, the claimed polymers contain at least one carbamate linker, however, they may also contain several carbamate linkers such as 2, 3, 4, or 5 carbamates.

The term "urethane- and/or urea-containing moiety" as used herein is meant to be a moiety composed of organic units joined by carbamate (urethane) links, i.e. -NH-(C=O)-O-; and/or urea links, i.e. -NH-(C=O)-NH-. Hence, in one embodiment, this moiety may contain only urethane linkers. Alternatively, this moiety may contain only urea linkers. Moreover, this moiety may also contain a combination of urethane and urea linkers.

As detailed herein above, the urethane-based polymers of the present invention may include different types and numbers of end-groups, including acrylate groups, (multi)methacrylate groups, (multi)acrylate group, thiolactones and thiol-ene crosslinkable groups. Alternatively, the urethane-based polymers may also include (meth)acrylamide groups. Hence, the compounds of the present invention may also be termed as such, for example, in the event of X and/or Y being selected as acrylate groups, the polymers may be termed acrylate end-capped urethane-based polymers (i.e. AUP).

Hence, in a specific embodiment, the present invention also provides an acrylate end-capped urethane-based polymer of formula (II) 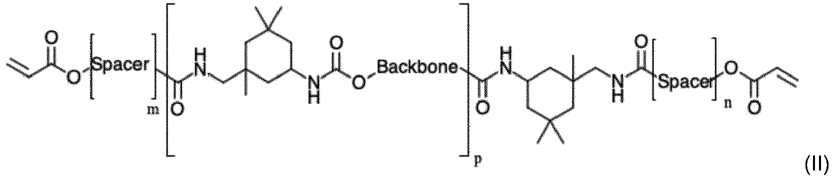 wherein m, n, p, Spacer and Backbone are defined as herein above.

In an alternative embodiment, the present invention also provides a urethane-based polymer of formula (I) 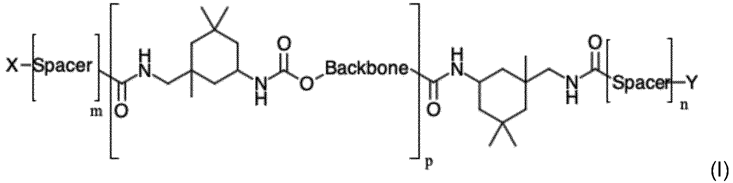 wherein m, n, p, Spacer and Backbone are defined as herein above. Hence, each occurrence of crosslinkable urethane-based polymer (CUP) in the current application can be replaced by urethane-based polymer (UP).

The term "acrylate end-capped" as used herein means that the acrylate groups of the molecules of the invention are the polymer endgroups.

In the context of the present invention, the term "acrylate" is meant to include salts, esters and conjugate bases of acrylic acid and it derivatives. Acrylates contain vinyl groups, i.e. 2 carbon atoms double bonded to each other, directly attached to a carbonyl carbon. An acrylate moiety is typically represented as follows: 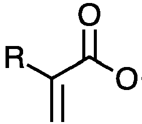 wherein R represents -H in the event of acrylates or an alkyl group such as for example a methyl (-CH₃) moiety, in the event of methacrylates. The (meth)acrylate groups according to the present invention are attached to the remainder of the polymer via the -O- linker, such that the double bonded carbon atom faces outwardly of the molecules.

In a specific embodiment, X and/or Y, may be selected to be a functional group that is able to or susceptible to thiol-ene cross-linking (i.e. a thiol-ene cross-linkable group). Preferably, the functional groups comprise functional groups able to or susceptible to thiol-ene crosslinking. The functional groups comprise for example meth(acrylate) functional groups, norbornene functional groups, vinyl ether functional groups, vinylester functional groups, allyl ether functional groups, propenyl ether functional groups and/or alkene functional groups and/or N-vinylamide functional groups. Particularly preferred functional groups comprise norbornene functional groups and/or vinylether functional groups.

The use of thiol-ene cross-linkable groups in the urethane-based polymers of the present invention, may be advantageous, since these can reduce the brittleness of the end products and result in a more homogeneous network formation.

In the context of the present invention, the term "spacer" is meant to be a moiety intended to provide a (flexible) hinge between 2 other elements of the molecule in which it is included, thereby spatially separating said elements. In the context of the present invention, a spacer may be present as indicated in Formula I. In the context of the invention, any type of suitable moiety may be used as a spacer, however, it is preferably selected from the list comprising oligo(ethylene oxide), oligo(propylene oxide), oligo(caprolactone), oligo(lactide) and oligo(glycolide): 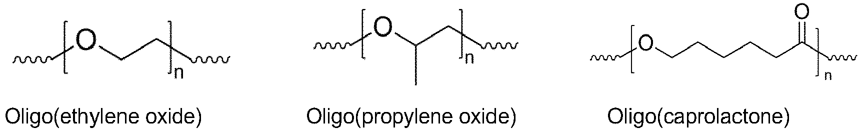 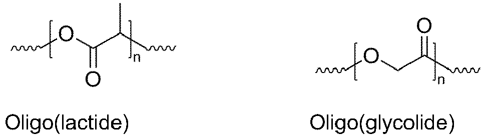 wherein n is 1-6

Moreover, as evident from Formula I, the spacer is present on both sides of the molecule, in which m and n are independently selected from 1-6. This means that where a spacer is selected to be for example oligo(ethylene oxide) and n is for example 2, the spacer thus comprises 2 ethylene oxide moieties. Moreover, the left and right parts of the claimed molecules need not to be symmetrical, meaning that each spacer and the number of monomeric units within each spacer may be selected independently from each other. Nevertheless, in a preferred embodiment, the left and right parts of the claimed molecules are symmetrical, meaning that both sides of the molecule contain the same spacer containing the same number of monomeric units.

As evident from formula I, the claimed molecules also encompass a backbone, which may be selected from the list comprising: poly(ethylene glycol) (PEG), poly(vinyl pyrrolidone) (PVP), poly(n-vinyl caprolactam) (PNVCL), poly(lactic acid) (PLA), poly(caprolactone) (PCL) or a combination thereof:

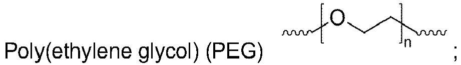

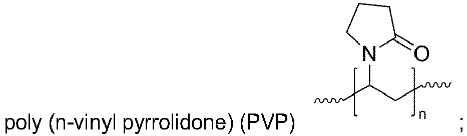

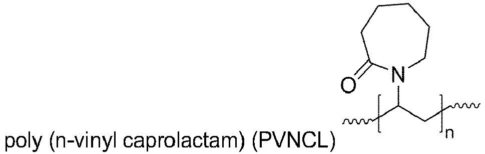

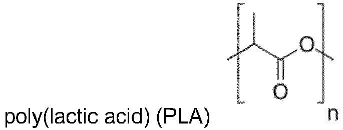

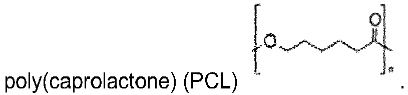

In a particular embodiment, the present invention provides a polymer combination of cross-linkable urethane-based polymers (CUPs) represented by formula (I) and/or formula (II); wherein at least one of said polymers has a backbone of PEG and at least one other polymer has a backbone of PVP, PNVCL, PLA, PCL or a combination thereof. In a particular embodiment, said polymer combination may be selected from a copolymer, a polymer blend, or a combination of different polymer layers (i.e. multilayer stack).

In the context of the present invention, the term "polymer blend" is meant to be a polymer mixture in which two or more polymers of a different nature are blended. In the context of the present invention, a copolymer is meant to be a polymeric molecule comprising at least 2 different types of monomeric subunits. This means that the present invention also provides a cross-linkable urethane-based polymer (CUP) represented by formula (I); wherein at least one part of said polymer has a backbone of PEG and at least one other part of said polymer has a backbone of PVP, PNVCL, PLA, PCL or a combination thereof.

In a specific embodiment of the present invention, the cross-linker is selected such as to have a low molecular weight, whereas the CUP is preferably having a higher molecular weight.

Accordingly, in a particular embodiment, said cross-linker has a molecular weight of less than or equal to 2000 g/mol; such as from about 400 g/mol to about 2000 g/mol; more specifically about 400 g/mol; about 500 g/mol; about 600 g/mol; about 700 g/mol; about 800 g/mol; about 900 g/mol; about 1000 g/mol; about 1100 g/mol; about 1200 g/mol; about 1300 g/mol; about 1400 g/mol; about 1500 g/mol; about 1600 g/mol; about 1700 g/mol; about 1800 g/mol; about 1900 g/mol; or about 2000 g/mol.

In another particular embodiment, said CUP has a molecular weight of above 2000 g/mol; such as about 4.000 g/mol; about 6.000 g/mol; about 8.000 g/mol; about 10.000 g/mol; about 12.000 g/mol, about 20.000 g/mol, about 35.000 g/mol, about 40.000 g/mol.

Accordingly, where both the polymer and the crosslinker are selected to be a polymer of formula (I) and/or (II), the crosslinker is preferably having a low molecular weight, i.e. less than or equal to 2000 g/mol (e.g. 400 g/mol - 2000 g/mol) and the polymer is preferably having a high molecular weight, i.e. above 2000 g/mol (e.g. > 10000 g/mol, preferably > 20000 g/mol).

In another specific embodiment of the present invention, said backbone has a molecular weight of about 400 g/mol to about 40000 g/mol. Where both the polymer and the crosslinker are selected to be a polymer of formula (I) and/or (II), the crosslinker is preferably selected to have a backbone with a low molecular weight (e.g. 400 g/mol - 2000 g/mol) and the polymer is preferably selected to have a backbone with a high molecular weight (e.g. > 10000 g/mol, preferably > 20000 g/mol).

Where in the context of the present invention, the term molecular weight in respect of a polymer is used, this is meant to be the molecular weight of the backbone. Accordingly, where a polymer is said to have a molecular weight of above 2.000 g/mol; it is meant that the backbone of said polymer should have a molecular weight of above 2.000 g/mol.

In other words, the backbone of the polymers and if applicable the crosslinkers may be selected from any PEG, any PVP, any PNVCL, any PLA, any PCL or any combination thereof, such as a combination of PEG and PVP, a combination of PEG and PNVCL, a combination of PEG and PCL, a combination of PEG and PLA. Each of said combinations may thus be in the form of a polymer blend, e.g. polymers having a PEG backbone blended together with polymers having a PVP backbone. Alternatively said combinations may be in the form of a copolymer, e.g. polymers having a PEG/PVP backbone; wherein some occurrences of Backbone are selected to be PEG and other occurrences of Backbone are selected to be PVP. The same reasoning also applies for other combinations of polymers e.g. PEG/PNVCL, PEG/PLA, PEG/PCL.

In a particular embodiment of the present invention, at least one occurrence of said Backbone is PEG; in particular PEG having a molecular weight of above 10000 g/mol; more in particular PEG 12k, PEG20k, PEG35k or PEG40k; preferably PEG20k.

The advantage of the CUPs of the present invention is that they are electrospinnable. This is particularly advantageous in that these electrospun materials can be made in any kind of format, such as for example in the form of a sheet, a membrane, a fiber, a particle, a scaffold.

Electrospun materials provide an excellent environment to promote wound healing. Micro/nanofibers generated by the electrospinning technique offer a high surface-to-volume ratio, show good porosity levels, allow gaseous exchange and mimic the natural extra-cellular matrix. The formation of fibers via electrospinning depends on several parameters including but not limited to the viscosity, the needle-to-collector distance, the flow rate and the applied voltage. These parameters influence the morphology of the obtained fibers.

Cross-linkable urethane-based polymers (CUPs) are very interesting in this respect, due to their ability to cross-link upon Ultra-Violet (UV) irradiation in solid state. In addition, they exhibit high mechanical strength (up to 0.6 MPa in swollen state for precursors cross-linked in a 30 wt% aqueous solution) and biocompatibility. These hydrogel precursors can be based on different polymer backbones and cross-linking in the solid state is promoted by the presence of a flexible spacer which is linked to the backbone polymer by means of a di-isocyanate (such as for example isophorone di-isocyanate (IPDI)). In a particular embodiment, the fibrous material may be chemically crosslinked, such as for example through irradiation (e.g. UV), thermal crosslinking, redox cross-linking, electron-beam cross-linking.

To promote cross-linking, the fibrous materials of the present invention further encompass an oligomeric or macromonomeric urethane-based cross-linker. In the context of the present invention the term "oligomer" is meant to be a sequence of monomers which consists of a few repeating units, which is in contrast to polymers, wherein the number of monomers can be very high. Typical oligomers include dimers, trimers and tetramers, which are composed of 2, 3 and 4 monomers respectively. Oligomers are typically considered to comprise up to about 20 monomers. In the context of the present invention, the term "macromonomer" is a macromolecule with end-group which enable it to act as a monomer, such that each polymer or oligomer molecule contributes monomer units to a chain of the macromolecule.

In a particular embodiment, said crosslinker has a backbone selected from the list comprising PEG, multi-(meth)acrylate, multi-(meth)acrylamide or a thiol-ene crosslinkable group; in particular said crosslinker is a cross-linkable urethane-based polymer (CUP) represented by formula (I), wherein PEG has a molecular weight of about 400 (CUP-PEG400) to about 2.000 (CUP-PEG2k).

In a further particular embodiment, the weight ratio of said CUP to crosslinker is between 90:10 and 60:40; preferably 90:10.

Particularly preferred combinations of CUPs, are those having a high backbone molecular weight e.g. above 10k, and those having a low molecular weight e.g. less than 2k, of which the latter typically acts as a crosslinker. These combinations were found to be particularly suitable for electrospinning. In that aspect the following are particularly preferred:
a) a fibrous material comprising:
   - a cross-linkable urethane-based polymer (CUP) represented by formula (I), wherein PEG has a molecular weight of above 10000 g/mol;
   - as crosslinker, a cross-linkable urethane-based polymer (CUP) represented by formula (I), wherein PEG has a molecular weight of about 400 g/mol (CUP-PEG400) to about 2000 g/mol (CUP-PEG2k).
b) a fibrous material comprising:
   - a cross-linkable urethane-based polymer (CUP) represented by formula (I), wherein PEG has a molecular weight of about 20000 g/mol (CUP-PEG20k);
   - as crosslinker, a cross-linkable urethane-based polymer (CUP) represented by formula (I), wherein PEG has a molecular weight of about 2000 g/mol (CUP-PEG2k).

In another embodiment, the fibrous material of the present invention may further comprise an active agent. Examples of such active agents may for example be anti-bacterial agents in the event that materials are used in wound dressings, and textile. Said active agent may also be a drug where the material is used as a carrier for drug delivery. Moreover, due to their tunable release properties, they are highly suitable for the controlled-release of such anti-microbial agents/drugs.

The fibrous materials of the present invention are suitable for numerous applications, including but not limited to hydrogels, in filtration devices, in affinity membranes, in (protective) clothing, in drug delivery systems, in tissue scaffolds,....

The present invention also provides a fibrous material as defined herein for use in human and/or veterinary medicine; more in particular for use in skin care and/or wound care; such as in particular for the treatment of wounds.

### EXAMPLES

### MATERIAL AND METHODS

**Table 1: Overview of material blends for electrospinning.**

| **Name** | **Material*** | **PVP 40k** | **Solvents** | **Photoinitiator** |
|---|---|---|---|---|
| AUP(20+2)k | AUP20k 27wt% | 0 wt% | ddH₂O 63wt% | Irgacure 2959 |
| Blank | AUP2k 3wt% | | Ethanol 7wt% | 0.077wt% |
| AUP(20+2)k | AUP20k 27wt% | 2.4 wt% | ddH₂O 60.84wt% | Irgacure 2959 |
| PVP | AUP2k 3wt% | | Ethanol 6.76wt% | 0.077wt% |
| PCL Blank | PCL 80k 20w/v% | 0 w/v% | Chloroform | / |
| PCL PVP | PCL 80k 20w/v% | 1.6 w/v% | Chloroform | / |

| | | | | |
|---|---|---|---|---|
| *AUP: Acrylate end-capped urethane-based polymers having a 2k or 20k PEG Backbone | | | | |

### Electrospinning set-up and parameters

The electrospinning equipment mainly consists of a high voltage source (Glassman high voltage, Inc.; EL Series 40-45 Watt Regulated High Voltage DC Power Supplies), a motion controller (CWFW Universiteit Gent) and a pumping system (NE-1000 Programmable Single Syringe Pump).

The parameters used for electrospinning are presented in Table 2, the needle specifications are presented in Table 3.

**Table 2: Optimized parameters used in electrospinning.**

| **Material** | **Distance (cm)** | **Voltage (kV)** | **Flow rate (ml/hour)** | **Needle RH (%) Duration (hours)** | | |
|---|---|---|---|---|---|---|
| AUP (20+2)k Blank | 20 | 18 | 0.9 | TE718150PK | 28 | 2.5 |
| AUP (20+2)k PVP | 20 | 19 | 1.0 | TE718150PK | 24 | 2.5 |
| PCL Blank | 25 | 12 | 1.5 | TE721100PK | 24 | 1.0 |
| PCL PVP | 25 | 13 | 1.5 | TE721100PK | 24 | 1.0 |

**Table 3: Specifications of needles, made by Techcon Systems.**

| **Needle** | **Gauge number** | **Interma; diameter (mm)** | **Outer Diameter (mm)** | **Length (inch)** |
|---|---|---|---|---|
| TE718150PK | 18 | 0.838 | 1.270 | 1.5 |
| TE721100PK | 21 | 0.495 | 0.813 | 1 |

Cross-linking of AUP was performed by UV curing by flushing in a UVA-transparent plastic bag to avoid interference of oxygen during crosslinking.

The electrospun fibers/mats were UV-cured by placing them between 2 high performance UV-A transilluminators manufactured by AppliTek NV, with wavelengths in the range of 315-400 nm for 1 hour. The intensity of the upper and lower lamps was respectively 6.8mW/cm² and 6.2mW/cm². Prior to UV-curing, the electrospun fibers/mats were put in UVA-transparent plastic bags and flushed with argon to avoid interference of oxygen during the UV-curing process. The intensity of both lamps was verified by measuring with a radiometer and probe UV-A (0-200 mW/cm²), type RM12 manufactured by Opsytec Dr. Gröbel.

A vacuum oven was used to dry the electrospun mats and remove any remaining solvent. A Binder vacuum drying oven, model VD53 was used overnight at 40°C at a pressure lower than the vapour pressure of the solvent (73.6 mbar for water and 169.2 for ethanol, both at 40°C). A cold trap is used to capture the vaporized solvent.

### RESULTS

### 1) Results (and M&M) to show the relevance of the crosslinker

AUP PEG 20k can be electrospun as such. However, the material is mechanically too weak to be used for most applications. The addition of a crosslinker leads to a mechanically stronger material, whereby AUP PEG 2k resembles the AUP PEG 20k the most and leads to the least possibility of phase separation and as such the highest reproducibility.

### 2) Results (and M&M) to show the relevance of selecting high molecular weight PEG over other PEGs

Electrospinning of AUP PEG with a backbone MW up to 10kg/mol is difficult without the addition of a high MW PEG (1 M g/mol). The addition of PEG 1 M g/mol results in a leachable compound after cross-linking of the fiber mat, causing a shrinkage of the mat or a possible deformation, for example with a mat of 10k + PEG 1 M g/mol. Interestingly, high molecular weight AUP, such as the AUP PEG 20k has a sufficient chain entanglement to be able to electrospin by itself. Therefore, in the context of the present invention, high molecular weight AUPs are preferred.

## Claims

1. A fibrous material comprising:
- an oligomeric or macromonomeric urethane-based cross-linker having a backbone molecular weight of less than or equal to 2000 g/mol; and
- a cross-linkable urethane-based polymer (CUP) represented by formula (I) and having a backbone molecular weight of above 2000 g/mol 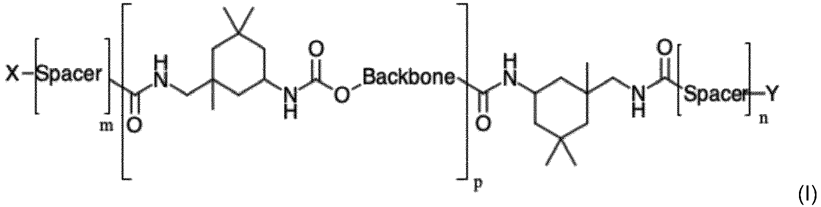
wherein
each occurrence of X and Y is independently a moiety comprising one or more of the following: acrylate groups, (multi)methacrylate groups, (multi)acrylate group, thiolactones and thiol-ene crosslinkable groups;
each occurrence of Spacer is independently selected from the list comprising: oligo(ethylene oxide), oligo(propylene oxide), oligo(caprolactone), oligo(lactide) and oligo(glycolide);
m and n are each independently from 1-6;
p is from 1-10; and
each occurrence of Backbone is independently selected from the list comprising polyethylene glycol (PEG), poly(vinyl pyrrolidone) (PVP), poly(N-vinyl caprolactam) (PNVCL), poly(caprolactone) (PCL), poly(lactic acid) (PLA) or a combination thereof.

2. The fibrous material as defined in claim 1; wherein at least one occurrence of said Backbone is PEG.

3. The fibrous material as defined in anyone of claims 1 or 2; wherein at least one occurrence of said Backbone is PEG having a molecular weight of above 10000 g/mol; in particular PEG 12k, PEG20k, PEG35k or PEG40k.

4. The fibrous material as defined in anyone of claims 1 to 3; wherein said urethane-based crosslinker has a backbone selected from the list comprising PEG, multi-(meth)acrylate, multi-(meth)acrylamide and thiol-ene crosslinkable groups.

5. The fibrous material as defined in anyone of claims 1 to 4; wherein said cross-linker is a cross-linkable urethane-based polymer (CUP) represented by formula (I), wherein PEG has a molecular weight of about 400 g/mol (CUP-PEG400) to about 2000 g/mol (CUP-PEG2k).

6. The fibrous material as defined in anyone of claims 1 to 5, wherein the weight ratio of said CUP to crosslinker is between 90:10 and 60:40; preferably 90:10.

7. The fibrous material as defined in anyone of claims 1 to 6 comprising:
- a cross-linkable urethane-based polymer (CUP) represented by formula (I), wherein PEG has a molecular weight of above 10000 g/mol;
- as crosslinker, a cross-linkable urethane-based polymer (CUP) represented by formula (I), wherein PEG has a molecular weight of about 400 g/mol (CUP-PEG400) to about 2000 g/mol (CUP-PEG2k).

8. The fibrous material as defined in anyone of claims 1 to 7 comprising:
- a cross-linkable urethane-based polymer (CUP) represented by formula (I), wherein PEG has a molecular weight of about 20000 g/mol (CUP-PEG20k);
- as crosslinker, a cross-linkable urethane-based polymer (CUP) represented by formula (I), wherein PEG has a molecular weight of about 2000 g/mol (CUP-PEG2k).

9. The fibrous material as defined in claim 8, wherein the weight ratio of CUP-PEG20k to CUP-PEG2k is 90:10.

10. The fibrous material as defined in anyone of claims 1 to 9; further comprising an active agent.

11. The fibrous material as defined in anyone of claims 1 to 10; which is chemically crosslinked.

12. Use of the fibrous material as defined in anyone of claims 1 to 11; as a hydrogel, in filtration devices, in affinity membranes, in (protective) clothing, in drug delivery systems, in tissue scaffolds.

13. The fibrous material as defined in anyone of claims 1 to 11 for use in human and/or veterinary medicine.

14. The fibrous material as defined in anyone of claims 1 to 11 for use in skin care and/or wound care.

## Patentansprüche

1. Ein Fasermaterial mit:
- einem oligomeren oder makro-monomeren Vernetzer auf Urethanbasis mit einem Backbone-Molekulargewicht von weniger als oder gleich 2000 g/mol; und
- einem vernetzbaren Polymer auf Urethanbasis (CUP), das durch Formel (I) dargestellt ist und ein Backbone-Molekulargewicht von über 2000 g/mol aufweist 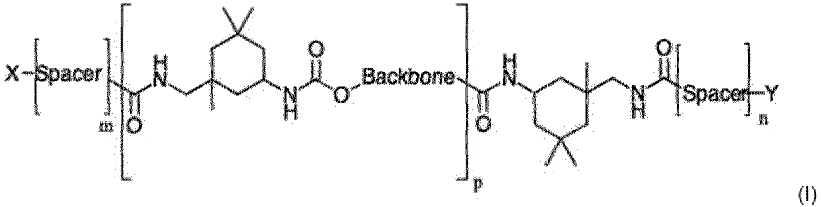
wobei
jedes Auftreten von X und Y unabhängig einen Rest mit einer oder mehreren der folgenden Gruppen darstellt: Acrylatgruppen, (Multi)methacrylatgruppen, (Multi)acrylatgruppe, Thiolactonen und Thiol-en vernetzbaren Gruppen;
jedes Auftreten von Spacer unabhängig aus der Liste mit folgenden ausgewählt ist: Oligo(ethylenoxid), Oligo(propylenoxid), Oligo(caprolacton), Oligo(lactid) und Oligo(glycolid);
m und n jeweils unabhängig von 1 bis 6 sind;
p von 1 bis 10 ist;
jedes Auftreten von Backbone unabhängig aus der Liste mit Polyethylenglycol (PEG), Poly(vinylpyrrolidon) (PVP), Poly(N-vinyl-Caprolactam) (PNVCL), Poly(caprolacton) (PCL), Poly(milchsäure) (PLA) oder einer Kombination aus diesen ausgewählt ist.

2. Das Fasermaterial nach Anspruch 1; wobei mindestens ein Auftreten des Backbone PEG ist.

3. Das Fasermaterial nach einem der Ansprüche 1 oder 2; wobei mindestens ein Auftreten des Backbone PEG mit einem Molekulargewicht von über 10000 g/mol ist; insbesondere PEG12k, PEG20k, PEG35k oder PEG40k.

4. Das Fasermaterial nach einem der Ansprüche 1 bis 3; wobei der Vernetzer auf Urethanbasis ein Backbone ausgewählt aus der Liste mit PEG, Multi-(meth)acrylat, Multi-(meth)acrylamid und Thiol-en vernetzbaren Gruppen aufweist.

5. Das Fasermaterial nach einem der Ansprüche 1 bis 4; wobei der Vernetzer aus einem durch Formel (I) dargestellten vernetzbaren Polymer auf Urethanbasis (CUP) besteht, wobei PEG ein Molekulargewicht von ca. 400 g/mol (CUP-PEG400) bis ca. 2000 g/mol (CUP-PEG2k) aufweist.

6. Das Fasermaterial nach einem der Ansprüche 1 bis 5, wobei das Gewichtsverhältnis des CUP zum Vernetzer zwischen 90:10 und 60:40, vorzugsweise 90:10 beträgt.

7. Das Fasermaterial nach einem der Ansprüche 1 bis 6, mit:
- einem durch Formel (I) dargestellten vernetzbaren Polymer auf Urethanbasis (CUP), wobei PEG ein Molekulargewicht von über 10000 g/mol aufweist;
- einem durch Formel (I) dargestellten vernetzbaren Polymer auf Urethanbasis (CUP) als Vernetzer, wobei PEG ein Molekulargewicht von ca. 400 g/mol (CUP-PEG400) bis ca. 2000 g/mol (CUP-PEG2k) aufweist.

8. Das Fasermaterial nach einem der Ansprüche 1 bis 7, mit:
- einem durch Formel (I) dargestellten vernetzbaren Polymer auf Urethanbasis (CUP), wobei PEG ein Molekulargewicht von ca. 20000 g/mol (CUP-PEG20k) aufweist;
- einem durch Formel (I) dargestellten vernetzbaren Polymer auf Urethanbasis (CUP) als Vernetzer, wobei PEG ein Molekulargewicht von ca. 2000 g/mol (CUP-PEG2k) aufweist.

9. Das Fasermaterial nach Anspruch 8, wobei das Gewichtsverhältnis von CUP-PEG20k zu CUP-PEG2k 90:10 beträgt.

10. Das Fasermaterial nach einem der Ansprüche 1 bis 9, weiterhin mit einem Wirkstoff.

11. Das Fasermaterial nach einem der Ansprüche 1 bis 10, das chemisch vernetzt ist.

12. Verwendung des Fasermaterials nach einem der Ansprüche 1 bis 11 als ein Hydrogel, in Filtriervorrichtungen, in Affinitätsmembranen, in (Schutz-)Kleidung, in Medikamentenabgabesystemen, in Gewebegerüsten.

13. Das Fasermaterial nach einem der Ansprüche 1 bis 11 zur Verwendung in der Human- und/oder Veterinärmedizin.

14. Das Fasermaterial nach einem der Ansprüche 1 bis 11 zur Verwendung bei der Hautpflege und/oder Wundversorgung.

## Revendications

1. Matériau fibreux comprenant :
- un agent de réticulation à base d'uréthane oligomérique ou macromonomérique présentant un poids moléculaire du squelette inférieur ou égal à 2000 g/mol ; et
- un polymère réticulable à base d'uréthane (CUP) représenté par la formule (I) et présentant un poids moléculaire de squelette supérieur à 2000 g/mol 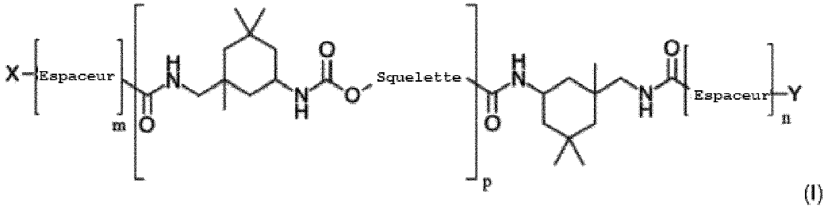
dans lequel
chaque occurrence de X et Y est indépendamment un fragment comprenant un ou plusieurs des suivants : des groupes acrylate, des groupes (multi)méthacrylate, un groupe (multi)acrylate, des thiolactones et des groupes réticulables thiol-ène ;
chaque occurrence de Espaceur est sélectionnée indépendamment dans la liste comprenant : un oligo(oxyde d'éthylène), un oligo(oxyde de propylène), une oligo(caprolactone), un oligo(lactide) et un oligo-(glycolide) ;
m et n vont chacun indépendamment de 1 à 6 ;
p va de 1 à 10 ; et
chaque occurrence de Squelette est sélectionnée indépendamment dans la liste comprenant un polyéthylène glycol (PEG), une poly(vinylpyrrolidone) (PVP), un poly-(N-vinylcaprolactame) (PNVCL), une poly(caprolactone) (PCL), un poly(acide lactique) (PLA) ou une combinaison de ceux-ci.

2. Matériau fibreux selon la revendication 1 ; dans lequel au moins une occurrence dudit Squelette est un PEG.

3. Matériau fibreux selon l'une quelconque des revendications 1 ou 2 ; dans lequel au moins une occurrence dudit Squelette est un PEG présentant un poids moléculaire supérieur à 10 000 g/mol ; en particulier un PEG12k, un PEG20k, un PEG35k ou un PEG40k.

4. Matériau fibreux selon l'une quelconque des revendications 1 à 3 ; dans lequel ledit agent de réticulation à base d'uréthane présente un squelette sélectionné dans la liste comprenant un PEG, un multi-(méth)acrylate, un multi-(méth)acrylamide et les groupes réticulables thiol-ène.

5. Matériau fibreux selon l'une quelconque des revendications 1 à 4 ; dans lequel ledit agent de réticulation est un polymère réticulable à base d'uréthane (CUP) représenté par la formule (I), dans lequel le PEG présente un poids moléculaire d'environ 400 g/mol (CUP-PEG400) à environ 2000 g/mol (CUP-PEG2k).

6. Matériau fibreux selon l'une quelconque des revendications 1 à 5, dans lequel le rapport pondéral dudit CUP par rapport à l'agent de réticulation est entre 90:10 et 60:40 ; de préférence 90:10.

7. Matériau fibreux selon l'une quelconque des revendications 1 à 6 comprenant :
- un polymère réticulable à base d'uréthane (CUP) représenté par la formule (I), dans lequel le PEG présente un poids moléculaire supérieur à 10 000 g/mol ;
- comme agent de réticulation, un polymère réticulable à base d'uréthane (CUP) représenté par la formule (I), dans lequel le PEG présente un poids moléculaire d'environ 400 g/mol (CUP-PEG400) à environ 2000 g/mol (CUP-PEG2k).

8. Matériau fibreux selon l'une quelconque des revendications 1 à 7 comprenant :
- un polymère réticulable à base d'uréthane (CUP) représenté par la formule (I), dans lequel le PEG présente un poids moléculaire d'environ 20 000 g/mol (CUP-PEG20k) ;
- comme agent de réticulation, un polymère réticulable à base d'uréthane (CUP) représenté par la formule (I), dans lequel le PEG présente un poids moléculaire d'environ 2000 g/mol (CUP-PEG2k).

9. Matériau fibreux selon la revendication 8, dans lequel le rapport pondéral du CUP-PEG20k par rapport au CUP-PEG2k est de 90:10.

10. Matériau fibreux selon l'une quelconque des revendications 1 à 9 ; comprenant en outre un agent actif.

11. Matériau fibreux selon l'une quelconque des revendications 1 à 10 ; qui est chimiquement réticulé.

12. Utilisation du matériau fibreux selon l'une quelconque des revendications 1 à 11 ; comme hydrogel, dans des dispositifs de filtration, dans des membranes d'affinité, dans des vêtements (de protection), dans des systèmes d'administration de médicament, dans des structures tissulaires.

13. Matériau fibreux selon l'une quelconque des revendications 1 à 11 pour une utilisation en médecine humaine et/ou vétérinaire.

14. Matériau fibreux selon l'une quelconque des revendications 1 à 11 pour une utilisation dans le soin de la peau et/ou le soin des plaies.
